# EUROPEAN PATENT SPECIFICATION

(11) **EP 1 587 706 B1**
(45) Date of publication and mention of the grant of the patent: **09.06.2010**
(21) Application number: 03815170.0
(22) Date of filing: 18.06.2003
(51) Int. Cl.: B60N 2/02, B60N 2/06, B60N 2/22

(54) **AUTOMOTIVE SEAT WITH CONTROL SYSTEM**
FAHRZEUGSITZ MIT STEUERSYSTEM
SIEGE D'AUTOMOBILE EQUIPE D'UN SYSTEME DE COMMANDE

(30) Priority: 03.01.2003 US 437804 P
(43) Date of publication of application: 26.10.2005
(73) Proprietor: Johnson Controls Technology Company, Plymouth, Michigan 48170 (US)
(72) Inventor: HANCOCK, Robert, L., Ann Arbor, MI 48105 (US); CUSSEN, Terrence, M., Englewood, CO 80111 (US); MCELROY, Joseph, W., Ann Arbor, MI 48105 (US); HENSEL, David, M., Canton, MI 48187 (US)
(74) Representative: Marshall, Caroline
(86) International application number: PCT/US2003/019174
(87) International publication number: WO 2004/062961

(56) References cited:
- US-A- 4 547 718
- US-A- 4 852 934
- US-A- 5 717 300
- US-B1- 6 460 934
- PATENT ABSTRACTS OF JAPAN vol. 007, no. 173 (M-232), 30 July 1983 (1983-07-30) & JP 58 076336 A (AISHIN SEIKI KK), 9 May 1983 (1983-05-09)

## Description

### BACKGROUND OF THE INVENTION

The present invention relates generally to the field of automotive seats and more particularly the present invention relates to an automotive seat having a seat back having a flexible member.

Outside of the automotive seat industry, it is known to provide a chair having a compliant seat back pivoted to a seat back frame assembly in at least two vertically spaced-apart locations for providing a controlled curvilinear flexure support.

It is known to provide an automotive seat having a reclineable back. It is also known to provide an automotive seat having a reclineable back and an independently movable seat base. It is also known to provide an automotive seat having an adjustable lumbar consisting of a flexible member having a first end anchored and a second end moved with respect to the first end to cause the flexible member to vary its shape to provide adjustable support within the lumbar region of an automotive seat. It is also known to simultaneously move a seat base and seat back to achieve a desired end position. For example, this may be desirable in the situation where the automotive seat functions to remember a user's seat position so that if the position is, altered the seat can be moved back to the user's desired position. However, references in the art do not teach any relationship between movement of a seat back and a seat base.
US 5,717,300 corresponding to the preamble of claim 1 discloses a system for longitudinal positioning of a vehicle seat, in which the system includes an electrical automatic device for displace the seat part of the seat forwards when the backrest of the seat is folded down, and backwards as far as a previously recorded set position when the backrest is brought upright again.

Notwithstanding the known devices, there remains a significant need to develop an automotive seat which is capable of better supporting an occupant of the seat. In particular, there remains a need to provide an automotive seat which is capable of providing continuous support for a plurality of sizes of seat occupants. Further, there remains a need to provide an automotive seat that includes a flexible seat back that automatically adjusts to an occupant's unique shape and posture including being able to adjust to the occupant's changing shape and posture. Further, there remains a need to provide an automotive seat having a seat back that is capable of providing an occupant with individualized support and which is capable of permitting back and spinal motion.

There also remains a need to provide an automotive seat having a seat back that can pivot more naturally in relation to an occupant and which is capable of better keeping the lumbar support in contact with the occupant.

It is desirable to provide an automotive seat that provides one or more of these or other advantageous features. Other features and advantages will be made apparent from the present description. The teachings disclosed extend to those embodiments that fall within the scope of the appended claims, regardless of whether they accomplish one or more of the aforementioned needs.

### SUMMARY OF THE INVENTION

The invention is defined in claim 1, additional features are disclosed in the dependent claims. According to one exemplary embodiment, a control system for a vehicle seat is provided that includes a seat base, a seat base motor, a seat back, a manual recliner mechanism, and a control circuit. The seat base motor is configured to move a seat base forward and backward. The manual recliner mechanism is configured to adjust an angle of inclination of the seat back. The control circuit is configured to move the seat base forward or backward in response to a change in the angle of inclination.

According to another exemplary embodiment, a control system for a vehicle seat is provided that includes a seat base, a seat base motor, a seat back, a manual recliner mechanism, and a control circuit. The seat base motor is configured to move a seat base forward and backward. The manual recliner mechanism is configured to adjust an angle of inclination of the seat back. The control circuit is configured to move the seat base in response to movement of the seat back, the seat base being moved at a ratio of approximately 1 degree of inclination to between approximately 1 mm to approximately 4 mm of forward or backward movement of the seat base.

According to another exemplary embodiment, a vehicle seat having a control system is provided that includes a track, a seat base, a seat base motor, a seat back, a manual recliner mechanism, a seat base input device, a control circuit. The seat base is coupled to the track. The seat base motor is configured to move the seat base forward and backward. The seat back is pivotally coupled to the track. The manual recliner mechanism is configured to pivot the seat back in relation to the track. The seat base input device is configured to receive operator commands for movement of the seat base. The control circuit is configured to receive the operator commands from the seat base input device and to control the seat base motor. The control circuit may also be configured to move the seat base in response to movement of the seat back. The control circuit may also be configured to move the seat base alone in response to receiving a command from the seat base input device.

According to another exemplary embodiment, a vehicle seat having an electronic control system includes a track, a seat base coupled to the track, a seat back pivotally coupled to the track, seat base and back input devices, and a control circuit. The seat base has a seat base motor configured to move the seat base forward and backward. The seat back has a seat back motor configured to adjust an angle of inclination of the seat back. The seat base input device is configured to receive operator commands for movement of the seat base. The seat back input device is configured to receive operator commands for movement of the seat back. The control circuit is configured to receive the operator commands and to control the seat base motor and seat back motor. The control circuit is configured to move both the seat base and the seat back in response to receiving a command from the seat back input device and to move the seat base alone in response to receiving a command from the seat base input device.

According to one advantageous feature, the control circuit is configured to move the seat base at a first speed in response to receiving a command from the seat back input device and to move the seat base at a second speed faster than the first speed in response to receiving a command from the seat base input device.

According to another exemplary embodiment, an electronic control system for a vehicle seat comprises a seat base motor, a seat back motor, an operator input device, and a control circuit. The seat base motor is configured to move the seat base forward and backward. The seat back motor is configured to adjust an angle of inclination of the seat back. The operator input device is configured to receive operator commands for movement of the vehicle seat. The control circuit is configured to receive the operator commands and to control a seat base motor and seat back motor. The control circuit is configured to move both the seat base and seat back simultaneously at a ratio of approximately 1 degree of inclination of the seat back to approximately 1.5 millimeters of forward or backward movement of the seat base.

According to another exemplary embodiment, an electronic control system for a vehicle seat includes a seat base motor, a seat back motor, an operator input device, and a control circuit. The seat base motor is configured to move the seat base forward and backward. The seat back motor is configured to adjust an angle of inclination of the seat back. An operator input device is configured to receive operator commands for movement of the vehicle seat. The control circuit is configured to receive the operator commands and to control the seat base motor and seat back motor. The control circuit includes a voltage divider circuit configured to provide a first voltage across the seat base motor and a second voltage across the seat back motor, wherein the first and second voltages are different.

According to one advantageous feature, the control circuit is configured to move both the seat base and seat back simultaneously at a ratio of approximately 1.5 millimeters of forward or backward movement of the seat base to approximately 1 degree of inclination of the seat back.

According to another advantageous feature, the control circuit provides open loop control of the seat base motor and the seat back motor.

According to another advantageous feature of the present invention, the seat control circuit can be modified and applied to a manually adjustable seat. In this alternative embodiment, a sensor is added to the vehicle seat to detect the position of the seat back. Based upon the information from the sensor, the position of the seat base is automatically adjusted according to the known advantageous relationship to simultaneously move the seat base approximately one and one-half (1.5) millimeters for each approximately one (1) degree of rotation of the seat back.

According to the alternative embodiment, the sensor is located to measure the angular position of the seat back with respect to the seat base and has a first end connected to one of the seat base and seat back and the other end of the sensor is adjusted by the other of the seat back and seat base. Further, based upon the readings produced by the sensors, a value is determined from a table to indicate the amount of movement to adjust the seat base along with the manual adjustment of the seat back.

### BRIEF DESCRIPTION OF THE DRAWINGS

The invention will become more fully understood from the following detailed description, taken in conjunction with the accompanying drawings, wherein like reference numerals refer to like parts, and in which:

FIG. 1. is schematic drawing of a vehicle seat, according to an exemplary embodiment;

FIG. 2 is a schematic drawing of an electronic control system for a vehicle seat, according to an exemplary embodiment;

FIG. 3 is a schematic drawing of an electronic control system for a vehicle seat, according to another exemplary embodiment;

FIG. 4 is a schematic drawing of an electronic control system for a vehicle seat, according to another exemplary embodiment;

FIG. 5 is a schematic drawing of an electronic control system tor a vehicle seat, according to another exemplary embodiment;

FIG. 6 is a schematic drawing of an electronic control system for a vehicle seat, according to another exemplary embodiment;

FIG. 7 is a partial, perspective view of a vehicle seat structure including a manually adjustable seat back according to another exemplary embodiment;

FIG. 8 is a partial, perspective view of the vehicle seat of FIG. 7 showing in detail the mechanisms of the exemplary embodiment;

FIG. 9 is a further partial, perspective view of the vehicle seat of FIG. 8 detailing the potentiometer sensor according to the exemplary embodiment; and

FIG. 10 is a schematic drawing of an electronic control system for a vehicle seat, according to the exemplary embodiment of FIG. 7.

FIG. 11 is a schematic drawing of an electronic control system for a vehicle seat, according to the exemplary embodiment of FIG. 7.

### DETAILED DESCRIPTION

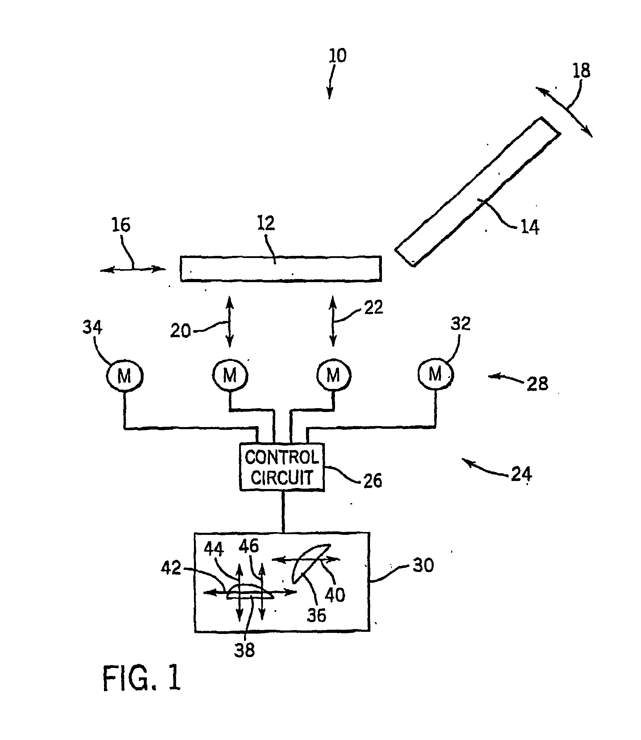

Referring first to FIG. 1, a vehicle seat 10 is shown in an exemplary embodiment. Vehicle seat 10 includes a seat base 12 and a seat back 14. Vehicle seat 10 can be a seat such as that disclosed in U.S. Provisional Application No. 60/356,836 entitled "Automotive Seat With Live Back" to Hancock et al., filed February 12, 2002.
Seat base 12 and seat back 14 are coupled to a track, such as an adjuster or other mounting member. Seat base 12 includes a seat base motor (not shown) configured to move the seat base forward and backward, as indicated by arrow 16. Seat back 14 includes a seat back motor (not shown) configured to adjust an angle of inclination, as indicated by arrow 18, of seat back 14. Vehicle seat 10 can further include motors configured to adjust the vertical height of seat base 1 2 (arrow 20) and the back of seat base 12 (arrow 22).

An electronic control system 24 for vehicle seat 10 includes a control circuit 26, a plurality of motors 28, and an operator input device 30. Motors 28 include seat back motor 32 configured to adjust the angle of inclination of seat back 14 and seat base motor 34 configured to move the seat base forward and backward. Motors 28 can be any of a number of different motor types, such as direct current motors, servo motors, electromagnetic control motors, etc.

Control circuit 26 includes circuit elements needed to drive motors 28 and to receive commands from operator input device 30. Control circuit 26 can include analog and/or digital circuit elements, and can include a digital processor, such as, a microprocessor, microcontroller, application specific integrated circuit (ASIC), etc. Control circuit 26 is configured to drive motors 28 using pulse-width modulated signals, direct current signals, or other control signals.

Operator input device 30 is shown in schematic form having a seat back button 36 and a seat base button 38. Each of buttons 36 and 38 instructs the user that the button is for the control of seat back 14 and seat base 12, respectively, by an applicable icon or, in this exemplary case, by shaping the button to correspond generally to a seat base or a seat back. In this manner, the user understands which button is for control of which portion of vehicle seat 10. Seat back button 36 is configured to be moved forward and backward as indicated by arrow 40 to adjust the angle of inclination of seat back 14 via control circuit 26 and seat back motor 32. Seat base button 38 is configured to adjust the forward and backward (fore-aft) position of seat 12 as indicated by arrow 42 and is further configured to move the front and back of seat base 12 upward and downward, selectively, as indicated by arrows 44 and 46. Operator input device 30 is an "8-way" switch in this exemplary embodiment, but may alternatively be a 6-way switch, or other switches.

Electronic control system 24 is configured in this exemplary embodiment to receive operator commands via input device 30 and to control motors 28. According to one advantageous embodiment, control circuit 26 includes a "power glide" feature wherein seat base 12 and seat back 14 are both moved in response to receiving a command from seat back button 36. Preferably, control circuit 26 is configured to move seat base 12 at a slower speed when receiving a command from seat back button 36 than when moving seat base 12 in response to a command from seat base button 38. Generally, it is desirable to move the seat base 12 a distance that is proportional to the distance which the seat back 14 has moved. One way to accomplish this is to simultaneously move seat base 12 and seat back 14 so that seat base 12 moves at a speed that is proportional to the speed of seat back 14. It has been found that a desirable relationship of movement between seat back 14 and seat base 12 to provide a "glide" effect includes moving seat base 12 and seat back 14 simultaneously at a ratio of approximately 1.5 millimeters (mm) of forward or backward movement of seat base 12 to approximately one degree of inclination of seat back 14. The ratio may alternatively be any value between 1 mm and 4 mm, or desirably between 1.5 mm and 3 mm, of forward or backward movement of seat base 12 to approximately one degree of inclination of seat back 14. Advantageously, the "power glide" feature of moving both seat base 12 and seat back 14 simultaneously in response to actuation of seat back button 36 provides improved user comfort and avoids multiple repositioning commands which would otherwise be needed to place vehicle seat 10 in an optimal seating position.

In an exemplary embodiment, seat back 14 cannot be moved without movement of seat base 1 2, unless seat back 14 has reached a mechanical or preset limit to its angle of inclination. Alternatively, seat back 14 cannot be moved without movement of seat base 12, unless seat base 1 2 has reached a mechanical or preset limit to the range of forward and backward movement.

Typically, a vehicle seat is mounted in a vehicle so that the seat base 12 is not horizontal. For example, a vehicle seat in an automobile may be mounted so that the seat base 12 has an approximately 6 degree forward incline. In this situation, the seat base 12 will be assisted by gravity as it moves backward and will be hindered by gravity as it moves forward. This may cause the seat base 12 to move backward at a faster speed than it moves forward. Accordingly, in one embodiment, the electronic control system 24 may include a measuring device (not shown) configured to measure the speed at which the seat back 14 is moving as the angle of inclination changes. The speed of the seat back 14 is input into control circuit 26 so that the speed of the seat base 12 can be controlled to be proportional to the speed of the seat back 14. This may be accomplished using a proportional feedback control loop. The measuring device may be a potentiometer, Hall effect sensor, or other like devices that can measure the speed of the seat back 14. Alternatively, it may be desirable to measure the speed of the seat base 12 as it moves and control the speed of the seat back 14 to maintain the desired proportional relationship between the speed of the two devices.

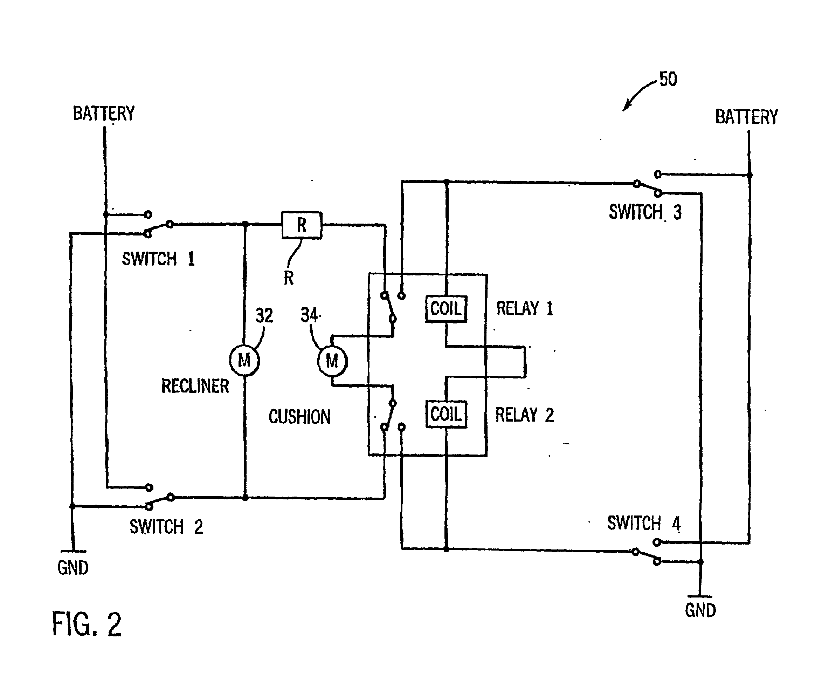

Referring now to FIG. 2, an exemplary embodiment of control circuit 26 will now be described as control circuit 50. Control circuit 50 includes four switches, switch 1, switch 2, switch 3, and switch 4. Control circuit 50 further includes relay 1, relay 2, and a resistor R. Resistor R has a resistance of between 1 and 3 Ohms, desirably 2 Ohms, and is rated for approximately 50 watts, but may alternatively have other resistance and power characteristics. Seat back motor 32 (or recliner motor) is disposed parallel with resistor R and seat base motor 34 (or cushion motor). Relay 1 is configured to switch one terminal of seat base 34 between resistor R and switch 3. Relay 2 is configured to switch a second terminal of seat base motor 34 between switch 2 and switch 4. Each of switches 1, 2, 3, and 4 is configured to select either battery or ground from a vehicle power source to motors 32, 34 and relays 1, 2. Switches 1 and 2 are connected to seat back button 36 and cannot be activated at the same time. Switches 3 and 4 are connected to seat base button 38 and cannot be activated at the same time. When recliner button 36 is moved forward (FIG. 1, arrow 40), switch 1 connects the battery to the terminal between motor 32 and resistor R to drive seat back 14 forward. The power from the battery is provided through resistor R to seat base motor 34 to drive seat base motor 34 at a speed of approximately 1.5 millimeters per degree of inclination of seat back 14. Thus, resistor R is part of a voltage divider network configured to provide a first voltage across motor 32 and a second, smaller voltage across motor 34. In response, motor 32 moves at a regular speed and motor 34 moves at a reduced speed from its regular speed.

When seat back button 36 is moved backward (FIG. 1, arrow 40), switch 2 provides power from the battery to the other terminal of seat back motor 32 to drive seat back 14 backward. Switch 2 also provides the battery power to seat base motor 34 through relay 2 and relay 1 and resistor R to move seat base 12 forward at a speed of 1.5 millimeters per degree of inclination of seat back 14.

When seat base button 38 is moved backward (FIG. 1, arrow 42), switch 3 provides battery power to a coil of relay 1 which switches the input to seat base motor 34 from resistor R to switch 3 and switches the other terminal of seat base motor 34 from switch 2 to switch 4 via a coil of relay 2. Since vehicle power is provided directly through motor 34 (i.e., not via resistor R), motor 34 is driven at a faster, regular speed than when power was provided through resistor R. Seat base motor 34 drives seat base 12 backward and seat back motor 32 is not driven, whereby seat back 14 does not move.

When seat base button 38 is moved forward (FIG. 1, arrow 42), switch 4 provides power from the battery through the coils of relay 2 and relay 1 to connect the terminals of seat base motor 34 to switches 3 and 4. Power returns through switch 3 to ground, thereby driving seat base 34 in the forward direction at the faster, regular speed. When switches 1 and 3 are activated simultaneously, indicating a command to move seat back forward and seat base 12 backward, relays 1 and 2 are activated, and both motors 32 and 34 are actuated at full speed to carry out the user command. If switches 1 and 4 are activated simultaneously, again relays 1 and 2 are activated such that both commands are carried out at full speed. Likewise, if switches 2 and 3 or switches 2 and 4 are activated (corresponding to user commands of seat back 14 backward and seat base 12 backward, and seat back 14 backward and seat base 12 forward, respectively), movement of motors 32 and 34 is carried out at regular speed, because resistor R is not included in the circuit for providing power from battery to ground through motors 32 and 34.

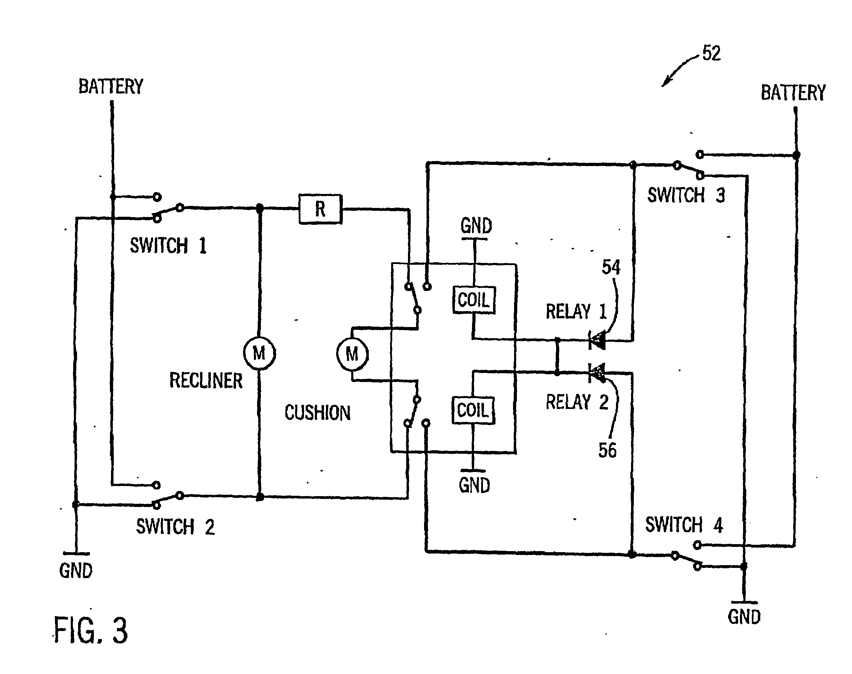

Referring now to FIG. 3, a schematic diagram of a control circuit 52 according to an alternative embodiment is shown. Control circuit 52 is the same as control circuit 50, except that switch 3 is coupled to the coil of relay 1 through a diode 54 and switch 4 is coupled to a coil of relay 2 through a diode 56. The anodes of diodes 54 and 56 are coupled to switches 3 and 4, respectively, and the cathodes of diodes 54 and 56 are coupled together and to the coils of relays 1 and 2. The opposite ends of the coils of relays 1 and 2 are coupled to ground. Diodes 54 and 56 protect the relay coils from turn-on and turn-off voltage transients from motor 34 (also referred to as inductive kick).

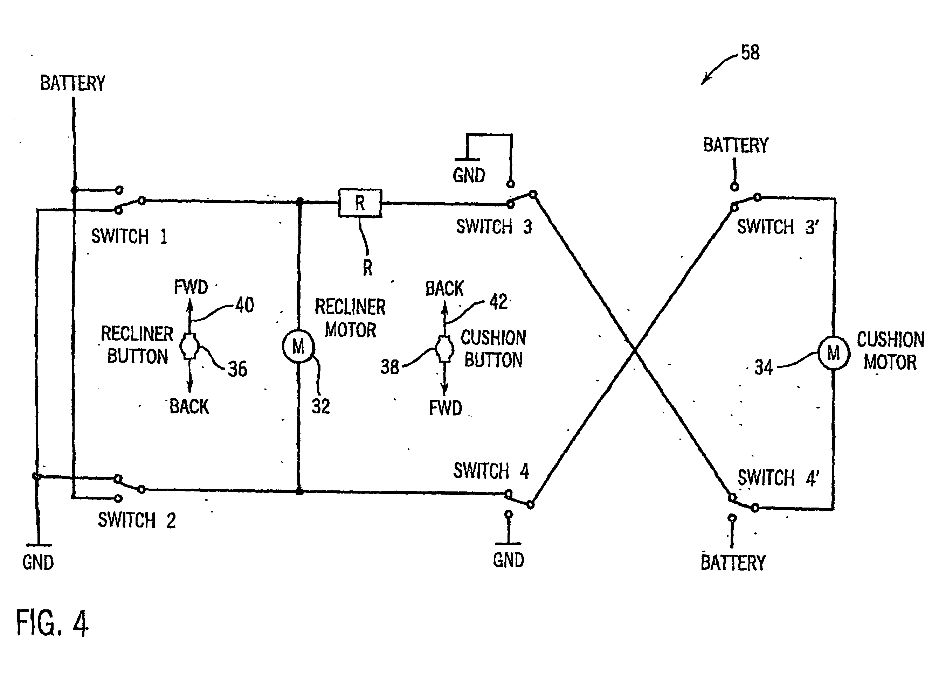

Referring now to FIG. 4, a further exemplary embodiment of control circuit 26 is shown as control circuit 58. In this embodiment, relays 1 and 2 of the embodiments of FIGS. 2 and 3 are replaced with two additional switches, switch 3' and switch 4'. Each of switches 1, 2, 3, 3', 4, and 4' are illustrated in this drawing and in the other drawings of the present application in their rest or sleep state, also called the non-activated state. Seat back button 36 is illustrated and includes arrow 40 indicating that forward movement of button 36 corresponds to actuation of switch 1 and backward movement of button 36 corresponds to actuation of switch 2. Likewise, seat base button 38 is illustrated along with arrow 42, indicating that backward movement of button 38 corresponds to actuation of switches 3 and 3' and forward movement of button 38 corresponds to actuation of switches 4 and 4'.

In this embodiment, resistor R is coupled between switch 1 and switch 3. Switch 3 selectively couples the other terminal of switch 3 between ground and switch 4'. Switch 4' selectively couples switch 3 to either battery or motor 34. The other terminal of motor 34 is coupled to switch 3'. Switch 3' couples the other terminal of motor 34 selectively to the vehicle battery or to switch 4. Switch 4 couples switch 3' selectively to either ground or switch 2. As in the embodiments of FIGS. 2 and 3, recliner motor 32 is coupled between switch 1 and switch 2, and switches 1 and 2 selectively couple either battery or ground to motor 32 to drive motor 32 in the forward or backward direction.

In operation, switches 1 and 2 are connected to button 36 and cannot be activated at the same time. Switches 3 and 3' are connected together and are activated by backward movement of button 38. Switches 4 and 4' are connected together and are activated by forward movement of button 38. When button 36 is moved forward, switch 1 is activated to provide battery power through motor 32 and to resistor R, switch 3, switch 4', through motor 34, to switch 3', to switch 4, to switch 2 and to ground. In this manner, motor 34 is driven at a reduced speed, preferably 1.5 millimeters per degree movement of motor 32.

When button 36 is moved backward, switch 2 is actuated to couple battery power through motor 32 to switch 1 to ground and to provide battery power through switch 2 to switch 4 to switch 3' through motor 34 to switch 4' to switch 3 through resistor R to switch 1 to ground. In this manner, seat back 36 moves backward and seat base 12 moves forward at a reduced speed.

When button 38 is moved forward, switches 4 and 4' are activated wherein power is provided from switch 4' through motor 34 to switch 3' to switch 4 to ground, thereby moving motor 34 forward at regular speed. If button 38 is moved back, switches 3 and 3' are activated, wherein power is provided from the vehicle battery to switch 3' through motor 34 to switch 4' to switch 3 to ground, thereby moving motor 34 backward at regular speed. If buttons 36 and 38 are both moved forward, motor 32 moves forward at full speed and motor 34 moves forward at full speed. If buttons 36 and 38 are moved backward or some combination of forward and backward, motors 32 and 34 are moved together simultaneously at regular speed.

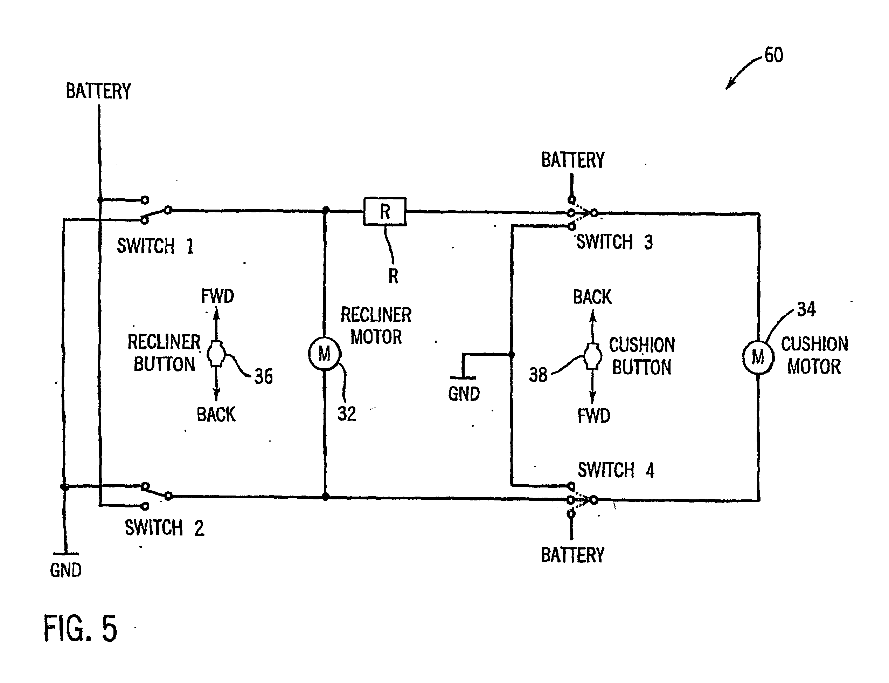

Referring now to FIG. 5, another exemplary embodiment of control circuit 26 is shown as control circuit 60. In this embodiment, switches 3 and 3' and switches 4 and 4' of the embodiment of FIG. 4 are replaced with 3-way switches, wherein switch 3 couples one terminal of motor 34 to battery power, to ground, or to resistor R. Likewise, switch 4 is configured to couple the other terminal of motor 34 to battery power, to ground, or to the terminal between switch 2 and motor 32. Motors 32 and 34 are disposed in parallel with one terminal shared by resistor R and motor 32. When button 38 is actuated alone, switch 3 provides battery power to motor 34 and switch 4 provides a closed circuit to ground. When button 38 is actuated forward alone, battery power is provided through switch 4 to motor 34 and switch 3 provides a closed circuit to ground. When seat back button 36 is actuated forward or backward, switches 3 and 4 are in their rest state, wherein power is provided to motor 34 only through resistor R, thereby moving motor 34 at a slower speed than when button 38 is actuated alone. Further, when button 38 is actuated simultaneously with button 36, power is provided separately to motors 32 and 34, and not through resistor R, such that both motors are moved at their full, regular speeds in both directions.

Notably, in the embodiments of FIGS. 2-5, resistor R comprises a portion of a voltage divider circuit configured to provide a first voltage across seat base motor 34 and a second voltage across seat back motor 32, wherein the two voltages are different. The difference in voltages can be used to drive motor 34 at a different speed than motor 32, preferably at a slower speed, to provide a power glide feature. Also of note, the circuits of FIGS. 2-5 provide open loop control, wherein no feedback is provided as to the position of motors 32 and 34. According to one alternative embodiment, feedback may be provided to further improve positioning of motors 32 and 34.

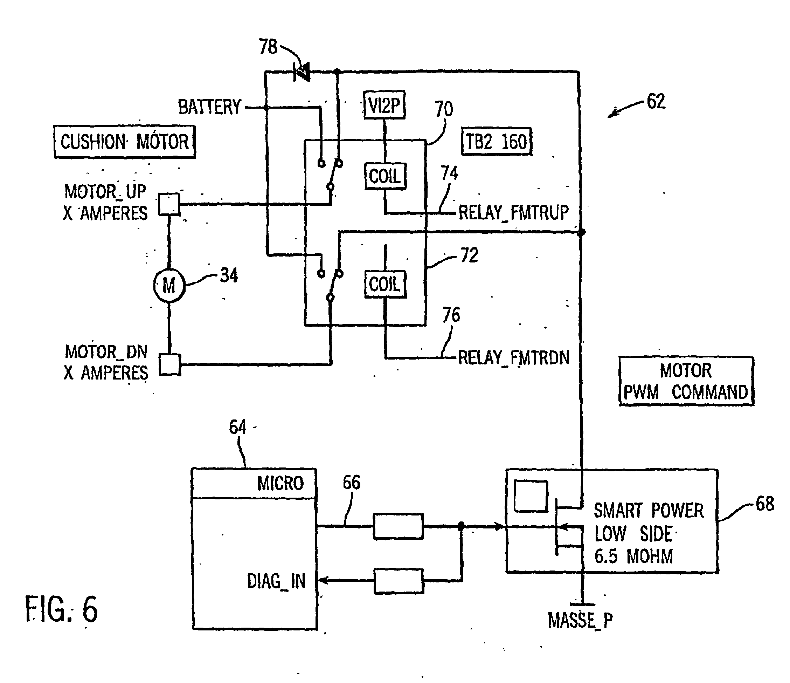

Referring now to FIG. 6, an alternative embodiment of control circuit 26 is shown as control circuit 62. In this embodiment, a digital processor, preferably a microprocessor 64 provides control signals to seat base motor 34 and/or seat back motor 32 (not shown). In this embodiment, a pulse-width modulated control signal is provided at microprocessor output 66 to a transistor 68, which is a temperature-protected field effect transistor (FET) in this exemplary embodiment, but may alternatively be other transistors. Transistor 68 is a BTS282Z transistor manufactured by Infineon Technologies, Munich Germany. The temperature protection provides the advantage of protecting the FET from excess heat due to prolonged use or continuous high current use. The source of transistor 68 is coupled to ground and the drain of transmitter 68 is coupled to one input of each of a plurality of relays 70, 72. Relays 70 and 72 are actuated by digital outputs from microprocessor 64 indicated at output 74 and output 76. When seat base button 38 (FIG. 1) is moved forward or backward, digital signals are provided on output 74 and output 76, respectively, to drive relays 70 and 72 to provide power from a vehicle battery source to the motor 34. When seat back button 36 is actuated forward and backward alone, outputs 74 and 76 are not actuated, and an adjustable control signal is provided from microprocessor 64 via output 66 and transistor 68 to provide an amount of power to motor 34 less than that provided when relays 70 and 72 are actuated. Preferably, control circuit 64 is configured to control motor 34 at a slower speed when seat back button 36 is actuated than when seat base button 38 is actuated. Further, the speed ratio is preferably 1.5 millimeters of movement of seat base 12 for every one degree of movement of seat back 14. A diode 78 is provided between a vehicle battery source and transistor 68 for protection of transistor 68 from voltage spikes in the battery.

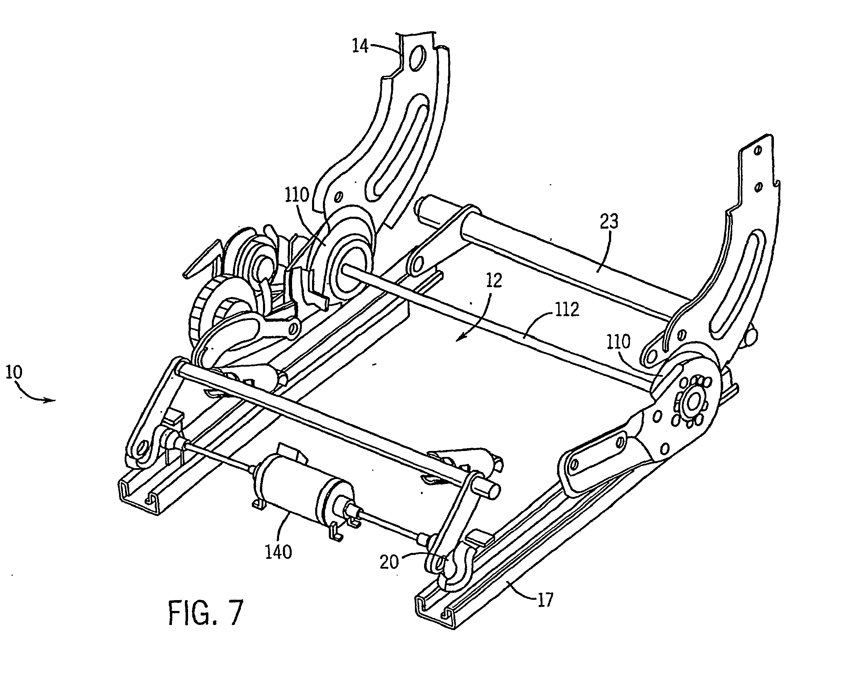

Referring now to FIG. 7, there is shown a manually operated embodiment of a vehicle seat according to an alternate exemplary embodiment of the present invention including a seat 10 having a seat base 12 (not shown), a seat back 14 (shown as a partial frame) and a seat track 17 which supports movement of the seat 10 back and forth thereon. As used herein, the term "manual" is used to refer to a movement, mechanisms, etc. that do not use an electric motor. Also, the term "manually actuated" is used to refer to movement, mechanisms, etc. that are moved, adjusted, or otherwise operated by hand.

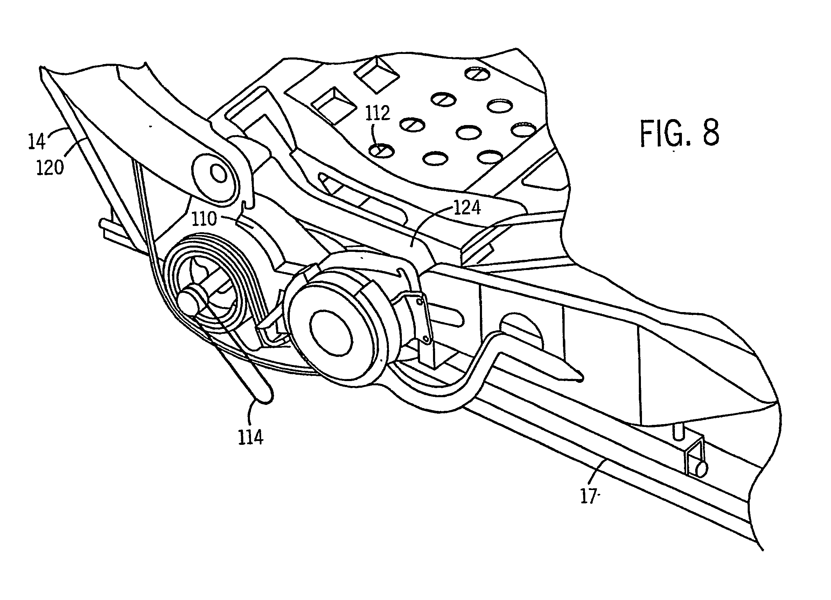

The seat 10, in FIG. 7, further includes first and second recliner mechanisms 110 interconnected by a bar 112. The recliner mechanisms 110 provide selective adjustment of the position of the seat back 14 with respect to the seat base 12. The recliner mechanisms 110 are preferably made using any known or appropriate type of recliner mechanism but may advantageously be made according to the teachings of US Patent No. 6,390,557. The recliner mechanism 110 is preferably activated using a handle 114, such as that shown in FIG. 8. The handle 114 is connected to one of the recliner mechanisms 110 and the bar member 112 translates the activation of the one recliner mechanism 110 to the other recliner mechanism 110.

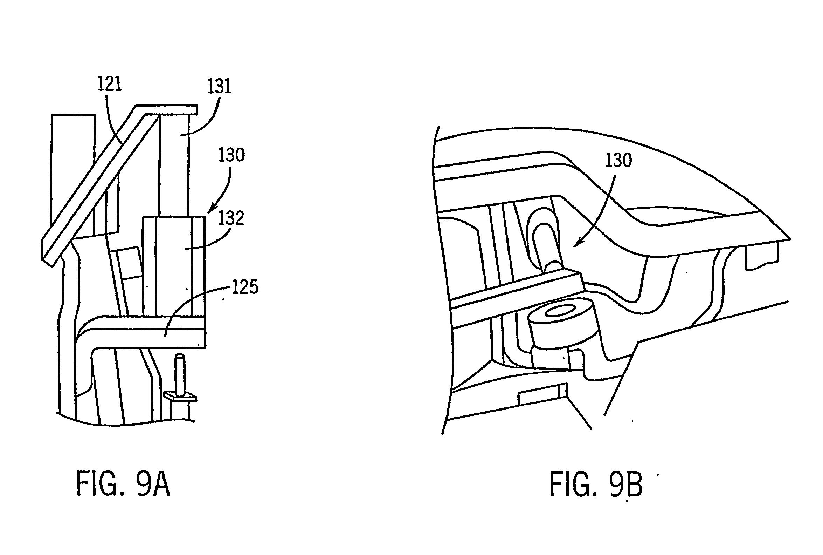

Accordingly, the recliner mechanism 110 is located between the frame member of the seat back 14 and the frame member of the seat base 12. Referring to FIG. 8 and FIG. 9, there can be seen the recliner bracket 120 and the seat base bracket 124. In order to determine the position of the recliner bracket 120 of the seat back 14 with respect to the seat base bracket 124, a sensor 130 is provided. In one embodiment, the sensor 130 is a plunger type potentiometer and is supported on the seat base bracket 124 by an extension bracket 125. The sensor 130 accurately detects movement of the seat back 14 with respect to the seat base 12. The sensor 130 is activated by the movement of the seat back 14 wherein an extension bracket 121 is connected to the recliner bracket 1 20 to contact a plunger 131 of the sensor 1 30 and cause the plunger 131 to move with respect to a base 132 of the sensor 1 30 an amount proportional to the angular rotation of the seat back 14 being adjusted by the recliner mechanism 110. Alternatively, sensor 130 may be a Hall-effect sensor. It should be appreciated that other sensor designs may be used instead of the potentiometer sensor 130 such that any known or appropriate design for a sensor 130 may be used provided the sensor gives an accurate indication of the recline position or recline speed of the seat back 14.

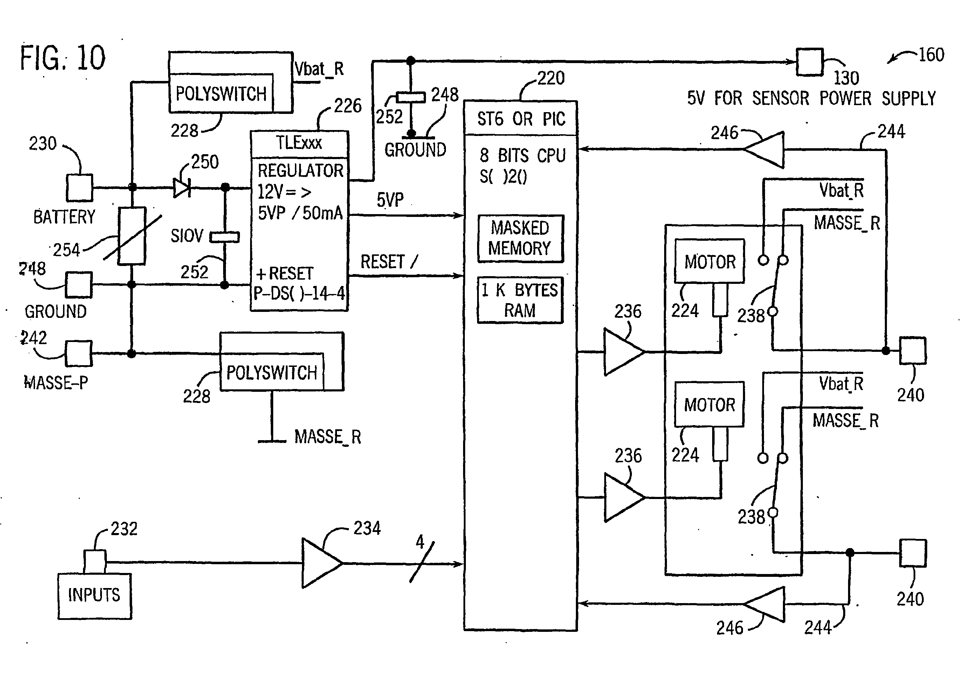

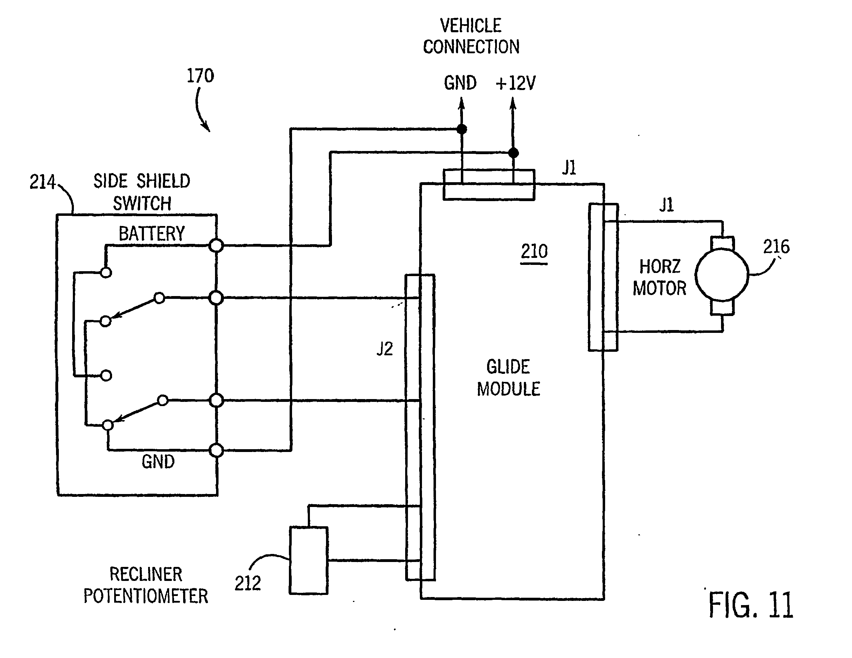

As should be understood, the recliner mechanisms 110 of the seat 10 of the embodiment shown in FIGs. 7-9 is manually actuated to adjust the position of the seat back 14. However, the seat base 12 is designed to be moved using an electric motor 140 for moving the seat 10 along the seat track 1 7. Further, as noted above with respect to the motorized control circuit 26, it is advantageous to provide a particular ratio of between approximately 1 millimeter to approximately 4 millimeters, and, desirably, between approximately 1.5 millimeters and approximately 3 millimeters, of movement ot seat base 12 for every one degree of movement of seat back 14. Thus, for each degree of rotation of seat back 14 detected by the sensor 130, the seat base 14 is adjusted accordingly. This may be accomplished using control circuits 1 60 and 170 as shown in FIGS. 10 and 11. The features and principles of control circuits 160 and 170 may be used in combination with each other or alone, or in any desired configuration.

In one embodiment, the sensor 130 detects the degree of rotation of seat back 14 which is provided as an output of sensor 130 which has a particular value. The control circuits 160 or 170 detect the particular value from the sensor 1 30 and determine the amount the seat base 1 2 should be moved based upon the desired ratio of moving the seat base 12 approximately 1 millimeters to approximately 4 millimeters for each 1 degree of rotation of the seat back 14. Seat base 12 may be moved to the desired position using closed loop feedback control. For example, once seat back 14 has moved so that its new position is known, the new position may be used as an input to determine the desired position of seat base 12. In this configuration, seat base 12 would include a sensor that would measure the position of seat base 12. Thus, seat base 12 is moved using closed loop feedback control until seat base 1 2 is at the desired position.

In an exemplary embodiment, the control circuits 160 and 170 are configured to delay moving the seat base 12 until the seat back 14 has stopped moving. In one embodiment, this can be accomplished using sensor 130 to monitor when seat back 14 has stopped moving. Typically, the delay before moving seat base 12 is approximately 1 second, but can be anything between approximately 0.5 seconds and approximately 3 seconds, or between approximately 0.5 seconds and approximately 2 seconds.

In another embodiment, seat base 12 is repositioned by simply turning electric motor 140 on for an appropriate amount of time. In this configuration, the position of the seat base 12 is not measured. Rather, the time that electric motor 140 is turned on is a function of a predetermined relationship. Also, since a vehicle seat is typically mounted so that the seat base 12 is not horizontal, electric motor 140 may be required to be turned on for a longer time in one direction than in the other direction in order to move the same distance. For example, a vehicle seat in an automobile may be mounted so that the seat base 12 has an approximately 6 degree forward incline. In this situation, the seat base 1 2 will be assisted by gravity as it moves backward and will be hindered by gravity as it moves forward. This may cause the seat base 12 to move backward at a faster speed than it moves forward. As explained, the effects of gravity can be accounted for by varying the time that the electric motor 140 is turned on depending on whether the seat base 12 is moving forward or backward. For example, the electric motor 140 would be on for a longer period of time if the seat back 14 was reclined three degrees (the seat base 12 would move forward and would be hindered by gravity) than if the seat back 14 was inclined three degrees (the seat base 1 2 would move backward and would be assisted by gravity). The difference in the time that electric motor 140 is on would be specific to the characteristics of each vehicle seat and driver. However, characteristics of each driver may be approximated using averages and other statistical techniques.

Control circuit 160, depicted in FIG. 10, is now described in further detail. Control circuit 160 includes a microprocessor 220, relays 224, a voltage regulator 226, and polyswitches 228. Power flows from a power source 230 to microprocessor 220 and sensor 130 through diode 250 and voltage regulator 226. Diode 250 acts as a reverse polarity protection device so that if the polarity of one of the elements in the circuit is reversed then it will not damage the element. Voltage regulator 226 steps the power down from 12 volts to 5 volts. Voltage regulator 226 also functions to detect a sudden decrease in power and send a signal to microprocessor 22 instructing it to shut down. In this manner, voltage regulator 226 prevents microprocessor 220 from suddenly shutting off without performing the necessary shut down procedure.

Microprocessor 220, shown in FIG. 10, is of the masked memory type and has 1 kilobyte of random access memory and an 8 bit central processing unit. Microprocessor 220 can be an ST6 microprocessor available from STMicroelectronics, 1060 East Brokaw Road, San Jose, CA 95131, or microprocessor 220 can be a PIC microprocessor available from Microchip Technology Inc., 2355 West Chandler Blvd., Chandler, AZ 85224. It should be understood, however, that any number of microprocessors may be used in control circuit 160.

Control circuit 160 comprises inputs 232, which include sensor 130 and a switch that can be actuated by the user to move the seat base 1 2 alone (i.e., movement of seat base 12 without movement of seat back 14). Input signals are transmitted from inputs 232 to microprocessor 220 by way of one or more buffers 234 that function to protect microprocessor 220 from otherwise damaging voltage and current variations. Microprocessor 220 uses the input signals to control electric motor 140 via relays 224. Sensor 130 may be a potentiometer or any other type of appropriate sensor such as a Hall-effect sensor.

Microprocessor 220 uses relays 224 to control the direction of electric motor 140 to move seat base 12 forward or backward. A signal is provided from microprocessor 220 to relays 224 through amplifiers or current boosters 236, which act to increase the strength of the signal. Relays 224 move switches 238 to control the polarity of electric motor 140. Leads 240 connect electric motor 140 to power supply 230 and a high current ground 242. One of leads 240 is the high side and the other lead 240 is the low side depending on the configuration of switches 238. In control circuit 160, electric motor 140 has dedicated power and ground connections (i.e., high current ground 242 refers to the ground for electric motor 140; low current or logic ground 248 is the ground for microprocessor 220) to prevent excess noise from interfering with the operation of the other components of the control circuit 160. Electric motor 140 is coupled to power supply 230 and high current ground 242 via polyswitches 228, which function as a resettable fuse. Thus, if electric motor 140 is drawing too much current, polyswitches will open the circuit to prevent electric motor 140 from being damaged. Microprocessor 220 receives status signals related to electric motor 140 as shown by lines 244. The status signals travel through one or more buffers 246 that function in a similar manner to buffer 234.

Also included as part of control circuit 1 60 are capacitors 252 and transient suppressor 254. Capacitors 252 filter noise from control circuit 160 as well as store charge to assist in maintaining the desired constant voltage in the respective portions of control circuit 160. Transient suppressor 254 is used to capture voltage spikes that may occur in control circuit 160.

As shown in FIG. 11, control circuit 170 includes module 210, which is configured to receive signals from potentiometer 212 and switch 214 and to control seat base motor 216 based on the signals accordingly. Potentiometer 212 is configured to determine whether seat back 14 has moved and, if so, to determine the new position of seat back 14. In one embodiment, potentiometer 212 is combined with a microswitch to sense movement of handle 114 (FIG. 8). In this embodiment, control circuit 1 70 includes a wake up function so that after a predetermined length of time without any adjustment of seat back 14, control circuit 170 enters sleep mode. In wake up mode, control circuit 170 is continually determining the position of potentiometer 212. In sleep mode, control circuit 170 does not determine the position of potentiometer 212. The microswitch is provided to determine whether seat back 14 has been moved and, in response, to send a signal to control circuit 170 to exit sleep mode and begin reading the position of potentiometer 212. In another embodiment, a device such as a Hall-effect sensor may be used in the place of potentiometer 212 and the microswitch. In this embodiment, the microswitch would not be necessary since the Hall-effect sensor sends out a signal only when seat back 14 is moved. This information is fed into module 210 which adjusts seat base motor 216 accordingly. Switch 214 is used to move seat base motor 216 independently of seat back 14. This feature may be useful when a user wants to adjust the seat base alone.

The wake up function described in connection with control circuit 170 may be applied to control circuit 160 as well as other control circuits that may be used to move the seat base 12 in response to a movement of seat back 14. In general, the wake up function prevents control circuits 160 and 170 from unnecessarily consuming power while there is no change in position of the seat back 14 such that there is no need to move the seat base 12 to maintain the predetermined movement ratio.

While the exemplary embodiments illustrated in the figures and described above are presently preferred, it should be understood that these embodiments are offered by way of example only. Other embodiments may also be used. The invention is not limited to a particular embodiment, but extends to various modifications, combinations, and permutations provides that they nevertheless fall within the scope of the invention as defined by the appended claims.

## Claims

1. A control system (24) for a vehicle seat (10) comprises:
a seat base motor (140) configured to move a seat base (12) forward and
a manual recliner mechanism (110) configured to adjust an angle of inclination of a seat back (14); and
a control circuit (160, 170) configured to move the seat base (12) forward or backward in response to a change in the angle of inclination of the seat back (14), **characterised in that** the amount of movement of the seat base (12) is proportional to the change in the angle of inclination of the seat back (14).

2. The control system (24) of claim 1 wherein the control system (24) is configured to move the seat base (12) at a ratio of approximately 1 degree of inclination of the seat back (14) to between approximately 1 mm to approximately 3 mm of forward or backward movement of the seat base (12).

3. The control system (24) of claim 1 wherein the control circuit (160, 170) is configured to move the seat base (12) forward in response to a recline of the seat back (14) and to move the seat base (12) backward in response to an incline of the seat back (14).

4. The control system (24) of claim 1 further comprising a sensor (130) that measures a position of the seat back (14).

5. The control system (24) of claim 4 wherein the sensor (130) is a potentiometer.

6. The control system (24) of claim 1 wherein the control system (24) is configured to move the seat base (12) at a ratio of approximately 1 degree of inclination of the seat back (14) to approximately 1.5 mm of forward or backward movement of the seat base (12).

7. A vehicle seat (10) comprising the control system (24) of claim 1.

8. The vehicle seat (10) of claim 7 further comprising the seat base (12) and the seat back (14).

9. The vehicle seat (10) of claim 8 further comprising a track (17), the seat base (12) being coupled to the track and the seat back (14) being pivotally coupled in relation to the track (17).

10. The vehicle seat (10) of claim 8 further comprising a seat base input device (38) configured to receive operator commands for the movement of the seat base (12).

11. The vehicle seat (10) of claim 10 wherein the control circuit (160, 170) is configured to move the seat base (12) alone in response to receiving a command from the seat base input device (38).

12. The vehicle seat (10) of claim 7 wherein the manual recliner mechanism (110) is activated by a handle (114).

13. The vehicle seat (10) of claim 7 wherein the control circuit (160, 170) includes a microprocessor (220).

## Patentansprüche

1. Steuersystem (24) für einen Fahrzeugsitz (10), umfassend:
einen Sitzbasismotor (140), der konfiguriert ist,
eine Sitzbasis (12) nach vorne und nach hinten zu bewegen;
einen manuellen Lehnenverstellungsmechanismus (110), der konfiguriert ist, einen Neigungswinkel eines Sitzrückens (14) zu verstellen; und
eine Steuerschaltung (160, 170), die konfiguriert ist, die Sitzbasis (12) als Reaktion auf eine Änderung bei dem Neigungswinkel des Sitzrückens (14) nach vorne oder nach hinten zu bewegen, **dadurch gekennzeichnet, dass** das Bewegungsausmaß der Sitzbasis (12) proportional zu der Änderung beim Neigungswinkel des Sitzrückens (14) ist.

2. Steuersystem (24) nach Anspruch 1, wobei das Steuersystem (24) konfiguriert ist, die Sitzbasis (12) mit einem Verhältnis von etwa 1 Grad Neigung des Sitzrückens (14) zu zwischen etwa 1 mm und etwa 3 mm einer Vorwärts- oder Rückwärtsbewegung der Sitzbasis (12) zu bewegen.

3. Steuersystem (24) nach Anspruch 1, wobei die Steuerschaltung (160, 170) konfiguriert ist, die Sitzbasis (12) als Reaktion auf ein Zurückklappen des Sitzrückens (14) nach vorne zu bewegen und die Sitzbasis (12) als Reaktion auf ein Schrägstellen des Rückens (14) nach hinten zu bewegen.

4. Steuersystem (24) nach Anspruch 1, weiterhin umfassend einen Sensor (130), der eine Position des Sitzrückens (14) misst.

5. Steuersystem (24) nach Anspruch 4, wobei der Sensor (130) ein Potentiometer ist.

6. Steuersystem (24) nach Anspruch 1, wobei das Steuersystem (24) konfiguriert ist, die Sitzbasis (12) mit einem Verhältnis von etwa 1 Grad Neigung des Sitzrückens (14) zu etwa 1,5 mm einer Vorwärts- oder Rückwärtsbewegung der Sitzbasis (12) zu bewegen.

7. Fahrzeugsitz (10), umfassend das Steuersystem (24) von Anspruch 1.

8. Fahrzeugsitz (10) nach Anspruch 7, weiterhin umfassend die Sitzbasis (12) und den Sitzrücken (14).

9. Fahrzeugsitz (10) nach Anspruch 8, weiterhin umfassend eine Bahn (17), wobei die Sitzbasis (12) an die Bahn gekoppelt ist und der Sitzrücken (14) schwenkbar in Relation zu der Bahn (17) gekoppelt ist.

10. Fahrzeugsitz (10) nach Anspruch 8, weiterhin umfassend eine Sitzbasiseingabeeinrichtung (38), die konfiguriert ist, Bedienerbefehle für die Bewegung der Sitzbasis (12) zu empfangen.

11. Fahrzeugsitz (10) nach Anspruch 10, wobei die Steuerschaltung (160, 170) konfiguriert ist, die Sitzbasis (12) alleine als Reaktion auf das Empfangen eines Befehls von der Sitzbasiseingabeeinrichtung (38) zu bewegen.

12. Fahrzeugsitz (10) nach Anspruch 7, wobei der manuelle Lehnenverstellungsmechanismus (110) durch einen Griff (114) aktiviert wird.

13. Fahrzeugsitz (10) nach Anspruch 7, wobei die Steuerschaltung (160, 170) einen Mikroprozessor (220) enthält.

## Revendications

1. Système de commande (24) destiné à un siège de véhicule (10), comprenant :
un moteur de base de siège (140) configuré pour déplacer une base de siège (12) vers l'avant et vers l'arrière,
un mécanisme d'inclinaison manuel (110) configuré pour régler un angle d'inclinaison d'un dossier de siège (14), et
un circuit de commande (160, 170) configuré pour déplacer la base de siège (12) vers l'avant ou vers l'arrière en réponse à une modification de l'angle d'inclinaison du dossier de siège (14), **caractérisé en ce que** la grandeur du déplacement de la base de siège (12) est proportionnelle à la modification de l'angle d'inclinaison du dossier de siège (14).

2. Système de commande (24) selon la revendication 1, dans lequel le système de commande (24) est configuré pour déplacer la base de siège (12) selon un rapport d'environ 1 degré d'inclinaison du dossier de siège (14) pour un déplacement compris entre environ 1 mm et environ 3 mm, vers l'avant ou vers l'arrière, de la base de siège (12).

3. Système de commande (24) selon la revendication 1, dans lequel le circuit de commande (160, 170) est configuré pour déplacer la base de siège (12) vers l'avant en réponse à une inclinaison en avant du dossier de siège (14), et pour déplacer la base de siège (12) vers l'arrière en réponse à une inclinaison en arrière du dossier de siège (14).

4. Système de commande (24) selon la revendication 1, comprenant en outre un capteur (130) qui mesure une position du dossier de siège (14).

5. Système de commande (24) selon la revendication 4, dans lequel le capteur (130) est un potentiomètre.

6. Système de commande (24) selon la revendication 1, dans lequel le système de commande (24) est configuré pour déplacer la base de siège (12) selon un rapport d'environ 1 degré d'inclinaison du dossier de siège (14) pour un déplacement d'environ 1,5 mm, vers l'avant ou vers l'arrière, de la base de siège (12).

7. Siège de véhicule (10) comprenant le système de commande (24) de la revendication 1.

8. Siège de véhicule (10) selon la revendication 7, comprenant en outre la base de siège (12) et le dossier de siège (14).

9. Siège de véhicule (10) selon la revendication 8, comprenant en outre une glissière (17), la base de siège (12) étant reliée à la glissière et le dossier de siège (14) étant relié de façon pivotante par rapport à la glissière (17).

10. Siège de véhicule (10) selon la revendication 8, comprenant en outre un dispositif d'entrée de base de siège (38) configuré pour recevoir les instructions d'opérateur pour le déplacement de la base de siège (12).

11. Siège de véhicule (10) selon la revendication 10, dans lequel le circuit de commande (160, 170) est configuré pour déplacer la base de siège (12) seule en réponse à la réception d'une instruction provenant du dispositif d'entrée de base de siège (38).

12. Siège de véhicule (10) selon la revendication 7, dans lequel le mécanisme d'inclinaison manuel (110) est activé par une poignée (114).

13. Siège de véhicule (10) selon la revendication 7, dans lequel le circuit de commande (160, 170) comprend un microprocesseur (220).
